# EUROPÄISCHE PATENTSCHRIFT

(11) **EP 1 220 745 B1**
(45) Veröffentlichungstag und Bekanntmachung des Hinweises auf die Patenterteilung: **19.05.2004**
(21) Anmeldenummer: 00992433.3
(22) Anmeldetag: 10.10.2000
(51) Int. Cl.: B29C 45/84

(54) **SPRITZGIESSMASCHINE MIT EINER SCHUTZABDECKUNG**
INJECTION MOLDING MACHINE WITH A PROTECTIVE COVER
MACHINE DE MOULAGE PAR INJECTION AVEC COUVERCLE DE PROTECTION

(30) Priorität: 16.10.1999 DE 19949958
(43) Veröffentlichungstag der Anmeldung: 10.07.2002
(73) Patentinhaber: Hehl, Karl, 72290 Lossburg (DE)
(72) Erfinder: Hehl, Karl, 72290 Lossburg (DE)
(74) Vertreter: Reinhardt, Harry
(86) Internationale Anmeldenummer: PCT/EP2000/009934
(87) Internationale Veröffentlichungsnummer: WO 2001/028748

(56) Entgegenhaltungen:
- EP-A- 0 583 639
- DE-B- 1 234 975
- DE-C- 4 227 336
- GB-A- 956 814
- US-A- 4 382 763

## Beschreibung

Die Erfindung betrifft eine Spritzgießmaschine zur Verarbeitung von Kunststoffen und anderen plastifizierbaren Massen mit einer Schutzabdeckung für die Spritzdüse nach dem Oberbegriff des Anspruches 1.

Aus dem Prospekt "Synergy, Zusammenspiel der Kräfte" der Netstal-Maschinen AG, 8752 Näfels/Schweiz, ist eine Spritzgießmaschine mit einem derartigen Düsenschutz bekannt. Der Düsenschutz ist in Richtung der Spritzachse beweglich und rollt auf Schienen ab, die zugleich dazu bestimmt sind, das Anlegen der Düse am stationären Formträger zu ermöglichen. Zu diesem Zweck sind die Führungsholme am stationären Formträger befestigt. Es besteht jedoch kein Schutz gegen einen Untergriff. Ferner ist die Abdeckung lediglich lose aufgesetzt, so dass sie sich infolge von Erschütterungen losrütteln kann und damit keinen zuverlässigen Schutz bietet.

Ferner ist es bekannt, einen derartigen Düsenschutz so anzuordnen, dass er über ein unteres, feststehendes Teil verfügt sowie über ein oberes, vom unteren abnehmbares Teil. Die feste Anordnung des Düsenschutzes erschwert den Zugang zur Düse und zum Plastifizierzylinder.

Aus der DE 1 234 975 B ist eine Schutzeinrichtung für eine Kunststoffspritzgießmaschine mit wenigstens zwei Spritzgießeinheiten bekannt. Da die übliche axial verschiebliche Schutzeinrichtung in diesem Fall den Düsenbereich nicht mehr ordnungsgemäß abdecken kann, werden dort Zwischenstücke zur Verlängerung der Holme vorgesehen, über die die vertikal stehende zweite Spritzgießeinheit abgestützt ist. An diesen Verlängerungen wird ein zweiteiliger Schutz angeordnet, der in axialer Richtung feststehend angeordnet ist. Allerdings kann eines derbeiden Teile um ein Scharnier ausgeschwenkt werden.

Ausgehend von diesem Stand der Technik liegt der vorliegenden Erfindung die Aufgabe zugrunde, eine Spritzgießmaschine mit einem Düsenschutz zu versehen, der einen zuverlässigen Schutz mit einer guten Zugänglichkeit kombiniert.

Diese Aufgabe wird durch eine Spritzgießmaschine mit den Merkmalen des Anspruches 1 gelöst.

Die Schutzabdeckung besteht aus einem Ober- und einem Unterteil, die vorzugsweise die Düse vollumfänglich umschließen. Bedarfsweise sind Ober- und Unterteil gemeinsam aus und in Schutzposition überführbar, so dass eine gute Zugänglichkeit gewährleistet ist, die dadurch noch gesteigert wird, dass das Oberteil gegenüber dem Unterteil verschwenkbar ist. Dadurch wird z.B. der Ausbau des Plastifizierzylinders erleichtert, gleichzeitig kann aber bei Arbeiten an der Düse die gesamte Schutzabdeckung verschoben werden.

Weitere Vorteile ergeben sich aus den Unteransprüchen.

Im folgenden wird die Erfindung anhand eines Ausführungsbeispieles näher erläutert.
Es zeigen:
- Fig. 1: eine Spritzgießmaschine in Vorderansicht,
- Fig. 2: eine vergrößerte dreidimensionale Ansicht von Plastifizierzylinder und stationärem Formträger bei geschlossener Schutzabdeckung,
- Fig. 3: eine Darstellung gemäß Fig. 2 mit zurückgeschobener Schutzabdeckung bei zurückgefahrenem Plastifizierzylinder,
- Fig. 4: eine Darstellung gemäß Fig. 3 mit verschwenktem Oberteil der Schutzabdeckung,
- Fig. 5: eine dreidimensionale Darstellung zur Verdeutlichung des Aufbaus der Schutzabdeckung.

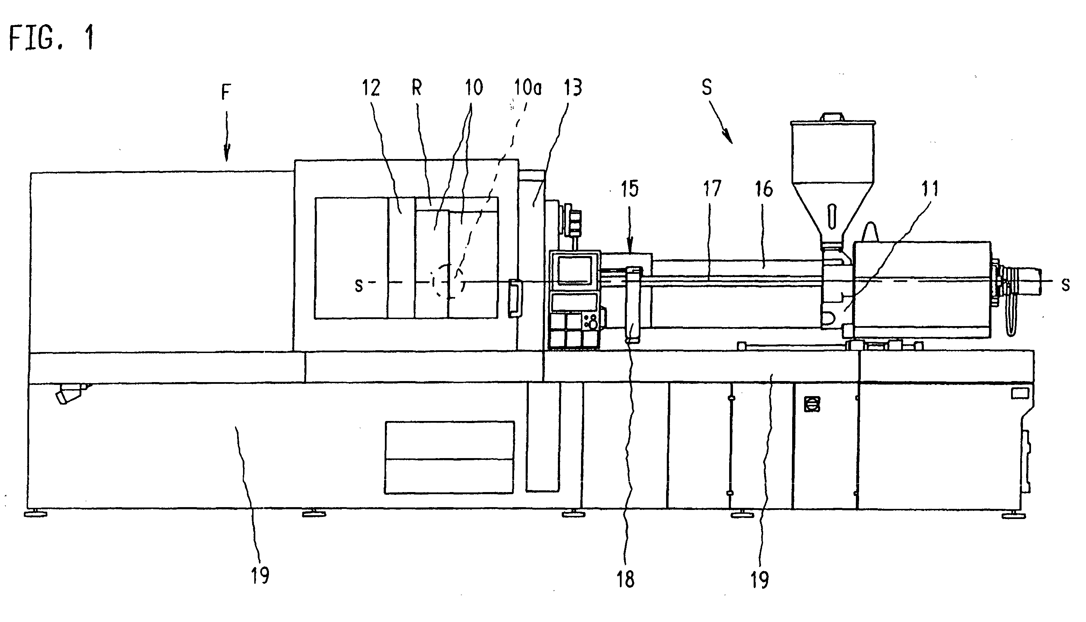

Fig. 1 zeigt eine Spritzgießmaschine, die zur Verarbeitung von Kunststoffen und anderen plastifizierbaren Massen wie keramische oder pulvrige Massen bestimmt ist. Die Spritzgießmaschine besitzt auf einem Maschinenfuß 19 eine Formschließeinheit F sowie eine Spritzgießeinheit S. In der Formschließeinheit ist in einem Formspannraum R zwischen beweglichem Formträger 12 und stationärem Formträger 13 eine Spritzgießform 10 aufgenommen. Die Spritzgießform besitzt einen Formhohlraum 10a, in den die Spritzgießeinheit S die plastifizierbaren Massen entlang einer Spritzachse s-s einspritzt. In der Spritzgießeinheit S selbst ist ein Plastifizierzylinder 16 aufgenommen.

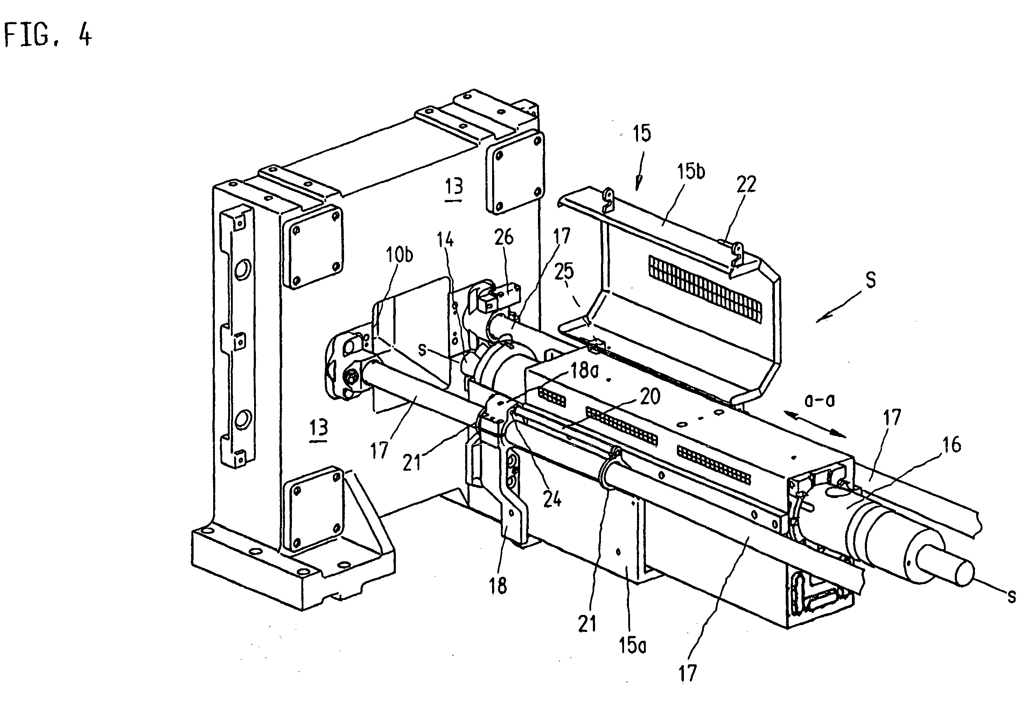

Gemäß Fig. 4 ist stimseitig an der Spritzgießeinheit S am der Spritzgießform 10 zugewandten Ende derselben eine Spritzdüse 14 angeordnet, die beim Einspritzen an einer Angußöffnung 10b der Spritzgießform 10 zur Anlage kommt. Die Spritzdüse 14 ist nur in Figur 4 zu erkennen, da sie üblicherweise durch eine Schutzabdeckung 15 zumindest während des Einspritzens abgedeckt ist. Die Schutzabdeckung kann im wesentlichen parallel zur Spritzachse s-s axial geführt in und außer Schutzposition überführt werden.

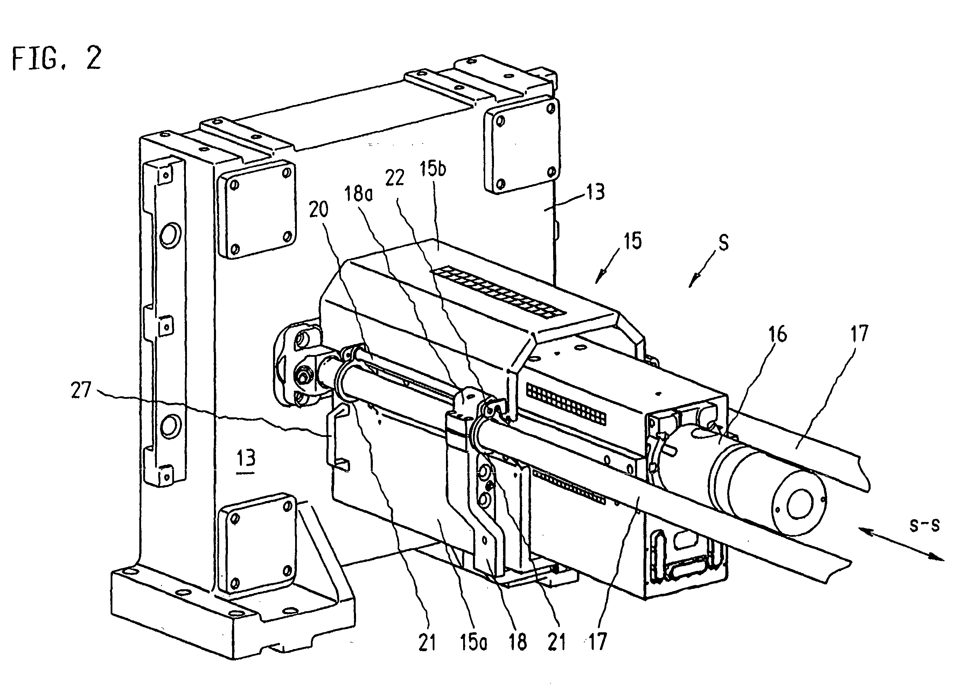

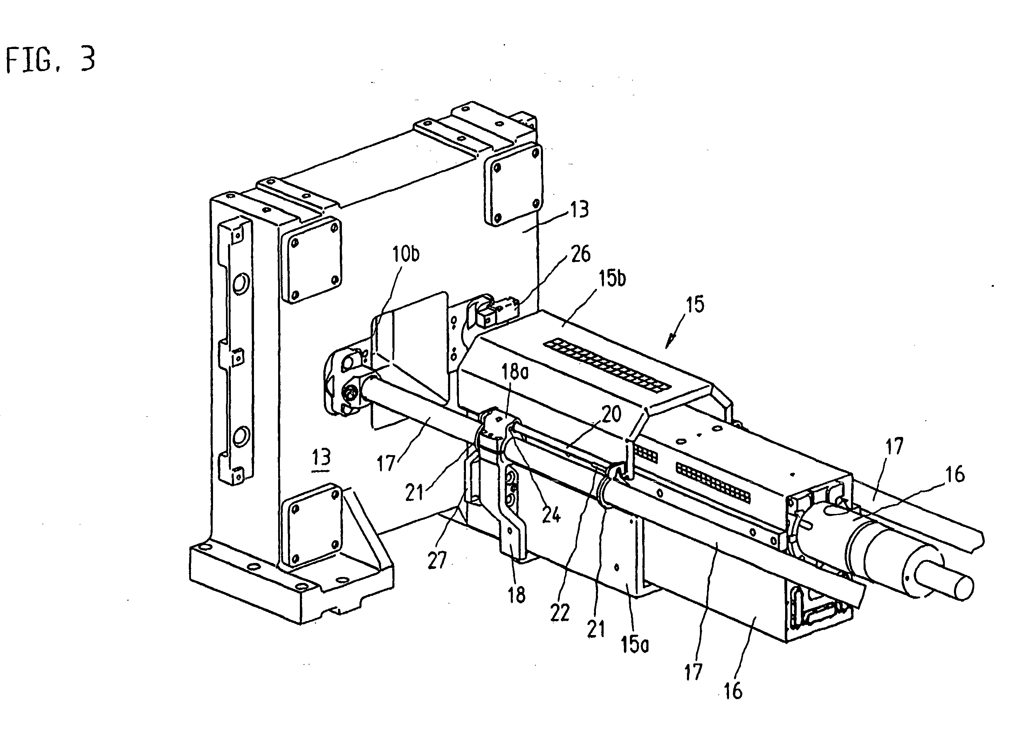

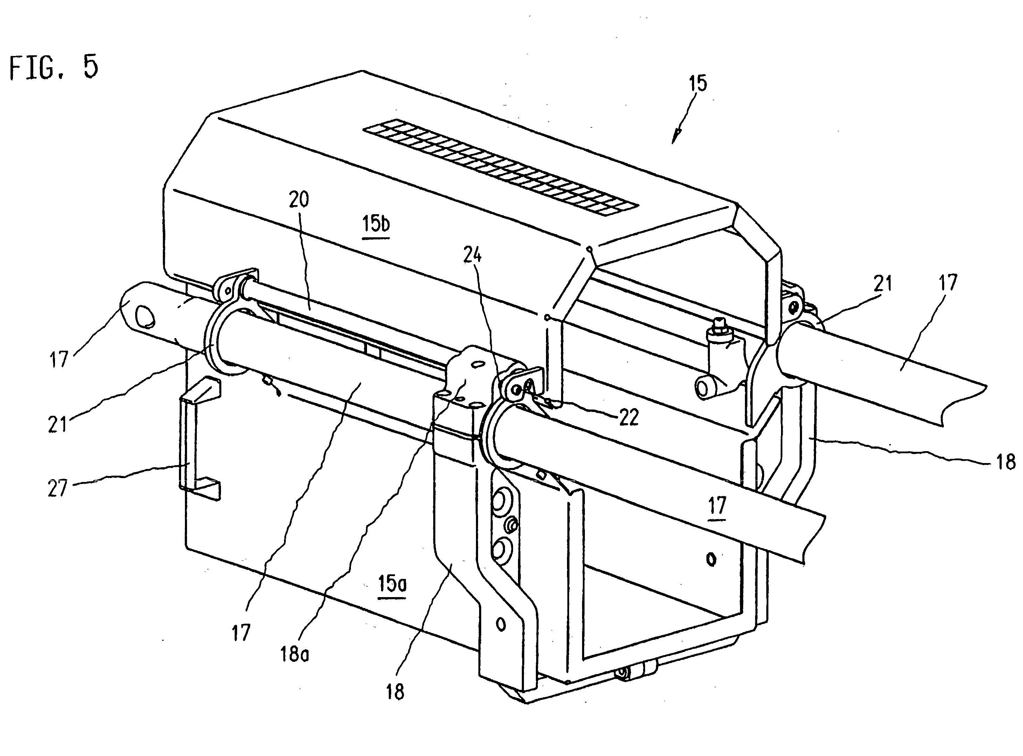

Die Schutzabdeckung 15 weist ein Unterteil 15a auf, in dem ein Oberteil 15b gemäß Fig. 4 um eine im wesentlichen parallel zur Spritzachse s-s angeordnete Schwenkachse schwenkbar befestigt ist. Dennoch können Unterteil 15a und Oberteil 15b gemeinsam aus der Schutzposition gemäß Fig. 2 außer Schutzposition gemäß Fig. 3 überführt werden. Als Führungselemente werden Führungssäulen 20 verwendet, die an dem vor allem in Fig. 5 deutlich erkennbaren Stützbügel 18 über Kugelbuchsen und Wellen gelagert sind. Über diese Führungssäulen wird auch das gesamte Unterteil und damit das mit diesem zusammenhängende Oberteil 15b an diesem Stützbügel gelagert. Anstelle des Stützbügels können auch andere Elemente vorgesehen sein. Ebenso ist es möglich, andere Elemente zur Führung zu benutzen, wie z.B. die Führungsholme 17 selbst.

Über den Stützbügel 18 kann die Spritzgießeinheit S auf dem Maschinenfuß abgestützt werden. Im Ausführungsbeispiel hat der Stützbügel, der hier nicht mit dem Maschinenfuß 19 in Verbindung steht, jedoch nur die Aufgabe als Führungselement für die Plastifiziereinheit und als Halterung für die Führungssäulen 20 zu dienen. Dadurch läßt sich die Spritzgießeinheit S auch problemlos verschwenken. In einer Anformung 18a des Stützbügels sind die Führungssäulen 20 gelagert, von denen eine zugleich die Schwenkachse a-a bildet. Gemäß den Fign. 3-5 erstrecken sich die Führungssäulen parallel zu den Führungsholmen 17, über die die Spritzgießeinheit S lösbar am stationären Formträger 13 befestigt ist. Die Führungssäulen 20 selbst sind über Gleitelemente 21 auch mit den Führungsholmen in loser Verbindung. Fig. 5 zeigt den Abstand, den die Gleitelemente 21 zu den Führungsholmen aufweisen. Diese kreisförmigen Gleitelemente 21 sind von den Führungsholmen 17 durchdrungen und halten diesen Abstand ein, damit die Gleitelemente 21 bei Belastung der Schutzabdeckung 15 an den Führungsholmen 17 in Anlage kommen können. Im übrigen sind im Ausführungsbeispiel die Gleitelemente 21 an den Enden der Führungssäulen 20 angeordnet. Die Führungssäulen sind so der üblichen Belastung der Schutzabdeckung bei Bewegung in und außer Schutzposition gewachsen. Um jedoch den Überlastschutz zu erreichen, sind die Gleitelemente vorgesehen, die die Schutzabdeckung mit Abstand an den Führungsholmen halten, so dass bei einer entsprechenden Beanspruchung dieser Abstand unter Entlastung der Lagerung der Führungssäulen leicht überwunden werden kann.

Bei Bewegung der Einheit ergibt sich folgender Bewegungsablauf:

Ausgehend von der Stellung gemäß Fig. 2, in der die Führungssäule 20 mit ihrem hinteren Ende an der Anformung 18a zu liegen kommt, wird die Schutzabdeckung 15 in die Stellung gemäß Fig. 3 überführt. Dabei gelangt das vordere Gleitelement 21 in Anlage am Stützbügel 18. Dennoch wird die gesamte Schutzabdeckung 15 zu diesem Zeitpunkt nur in den Anformungen 18a geführt, wobei sich die Führungssäule 20 wie ein Vergleich zwischen Fig. 2 und 3 zeigt, bei dieser Bewegung durch die Anformung 18a hindurch geschoben hat. Bei dieser Bewegung ergibt sich allenfalls eine lose Berührung zwischen Gleitelement 21 und Führungsholm 17. Kommt es allerdings zu einer äußeren Belastung der Schutzabdeckung, z.B. dadurch, dass ein Anwender mit dem Fuß auf der Schutzabdeckung steht, so wären die Kugelbuchsen und Wellen in der Anformung 18a des Stützbügels 18 dieser Belastung nicht mehr gewachsen. Zu diesem Zeitpunkt verringert sich daher der Abstand zwischen Gleitelement 18 und Führungsholm 17, so dass sich dort eine Anlage ergibt und eine zusätzliche Abstützung der Schutzabdeckung an den Führungsholmen 17 erreicht wird.

Fig. 4 und 5 zeigen, wie Oberteil 15b und Unterteil 15a zur gemeinsamen Bewegung miteinander verriegelt sind. Das Oberteil 15b besitzt einen sich in Richtung der Spritzachse s-s erstreckenden Verriegelungsstift 22. Dieser Verriegetungsstift wirkt mit einer Ausnehmung 24 des Stützbügels 18 zusammen. Bevor das Oberteil 15b der Schutzabdeckung 15 verschwenkt werden kann, muss der Verriegelungsstift 22 durch ein Zurückschieben der Schutzabdeckung 15 aus der Ausnehmung 24 des Stützbügels 18 herausgeführt werden. Ebenso kann die Lagerung des Oberteils 15b so gestaltet sein, dass eine Relativbewegung zwischen Oberteil 15b und Unterteil 15a erforderlich ist, um dadurch den Verriegelungsstift 22 z.B. aus einer Ausnehmung im Unterteil 15a freizusetzen. Bedarfsweise können sowohl an einem Stützelement 18 oder an einem beliebigen anderen hierfür geeigneten Element als auch am Unterteil entsprechende Verriegelungsmechanismen vorgesehen sein, die eine bewusste Entriegelung erforderlich machen, bevor das Oberteil 15b verschwenkt werden kann.

Fig. 4 zeigt einen Sicherungsmechanismus, der die Spritzgießeinheit außer Betrieb setzt, sobald die Schutzabdeckung 15 aus ihrer Schutzposition gemäß Fig. 2 entfernt wird. Hierzu ist ein Schalter 26, wie z.B. ein Näherungsschalter vorgesehen, der registriert, ob sich die Schutzabdeckung 15 in Anlage am stationären Formträger 13 befindet. Der Schalter 26 ist im Ausführungsbeispiel im Anschlußbereich der Führungsholme angeordnet, er kann jedoch ebenso am stationären Formträger befestigt werden. Ferner wird gemäß Fig. 4 ein Schaltelement 25 in Form eines Schaltfingers verwendet, der für die entsprechende Kontaktgebung sorgt.

### Bezugszeichenliste kein Bestandteil der Anmeldungsunterlagen

- 10: Spritzgießform
- 10a: Formhohlraum
- 10b: Angußöffnung
- 11: Trägerblock
- 12: beweglicher Formträger
- 13: stationärer Formträger
- 14: Spritzdüse
- 15: Schutzabdeckung
- 15a: Unterteil
- 15b: Oberteil
- 16: Plastifizierzylinder
- 17: Führungsholm
- 18: Stützbügel
- 18a: Anformung
- 19: Maschinenfuß
- 20: Führungssäule
- 21: Gleitelement
- 22 23: Verriegelungsstift
- 24: Ausnehmung
- 25: Schaltelement
- 26: Schalter
- 27: Griff
- a-a: Schwenkachse
- s-s: Spritzachse
- F: Formschließeinheit
- R: Formspannraum
- S: Spritzgießeinheit

## Patentansprüche

1. Spritzgießmaschine zur Verarbeitung von Kunststoffen und anderer plastifizierbarer Massen mit
- einer in einem Formspannraum (R) zwischen Formträgem (12, 13) aufgenommenen Spritzgießform (10),
- einer Spritzgießeinheit (S) zum Einspritzen der plastifizierbaren Massen in einen Formhohlraum (10a) der Spritzgießform (10) entlang einer Spritzachse (s-s),
- einem in der Spritzgießeinheit (S) aufgenommenen Plastifizierzylinder (16),
- einer Spritzdüse (14) am der Spritzgießform (10) zugewandten Ende des Plastifizierzylinders (16), die beim Einspritzen an einer Angußöffnung (10b) der Spritzgießform (10) anliegt,
- einer Schutzabdeckung (15) zum Abdecken der Spritzdüse (14) in Schutzposition während des Einspritzens, die im wesentlichen parallel zur Spritzachse (s-s) axial geführt aus und in Schutzposition überführbar ist,
**dadurch gekennzeichnet, dass** die Schutzabdeckung (15) ein Unterteil (15a) aufweist, an dem ein Oberteil (15b) um eine im wesentlichen parallel zur Spritzachse (s-s) angeordnete Schwenkachse (a-a) schwenkbar befestigt ist, und dass Unterteil (15a) und Oberteil (15b) gemeinsam aus und in Schutzposition überführbar sind.

2. Spritzgießmaschine nach Anspruch 1, **dadurch gekennzeichnet, dass** die Spritzgießeinheit (S) wenigstens einen Stützbügel (18) aufweist, der zugleich der Führung der Schutzabdeckung (15) dient.

3. Spritzgießmaschine nach Anspruch 2, **dadurch gekennzeichnet, dass** im Stützbügel (18) Führungssäulen (20) zur Führung der und zur Bewegung mit der Schutzabdeckung (15) gelagert sind, wobei vorzugsweise eine der Führungssäulen (20) zugleich die Schwenkachse (a-a) bildet.

4. Spritzgießmaschine nach einem der Ansprüche 1-3, **dadurch gekennzeichnet, dass** zur Führung der Schutzabdeckung (15) Führungssäulen (20) vorgesehen sind, die sich parallel zu Führungsholmen (17) erstrecken, über die die Spritzgießeinheit (S) lösbar am stationären Formträger (13) befestigt ist, und vorzugsweise über Gleitelemente (21) mit Abstand über diese Führungsholme (17) gleiten.

5. Spritzgießmaschine nach Anspruch 4, **dadurch gekennzeichnet, dass** die kreisförmigen Gleitelemente (21) von den Führungsholmen (17) durchdrungen sind und zu den Führungsholmen (17) einen solch geringen Abstand halten, dass die Gleitelemente (21) bei Belastung der Schutzabdeckung (15) an den Führungsholmen (17) in Anlage kommen.

6. Spritzgießmaschine nach Anspruch 4 oder 5, **dadurch gekennzeichnet, dass** die Gleitelemente zumindest an den Enden der Führungssäulen (20) angeordnet sind.

7. Spritzgießmaschine nach einem der vorhergehenden Ansprüche, **dadurch gekennzeichnet, dass** Oberteil (15b) und Unterteil (15a) zur gemeinsamen Bewegung miteinander verriegelt sind.

8. Spritzgießmaschine nach einem der vorhergehenden Ansprüche, **dadurch gekennzeichnet, dass** das Oberteil (15b) bzw. das Unterteil (15a) wenigstens einen, sich in Richtung der Spritzachse (s-s) erstreckenden Verriegelungsstift (22) aufweist, der mit einer Ausnehmung (24) am Unterteil (15a) bzw. Oberteil (15b) zusammenwirkt und dass zur Entriegelung das Oberteil bzw. Unterteil in Richtung der Spritzachse relativ zum Unterteil bzw. Oberteil beweglich ist, bevor das Oberteil (15b) um die Schwenkachse (a-a) verschwenkbar ist.

9. Spritzgießmaschine nach Anspruch 8, **dadurch gekennzeichnet, dass** die Ausnehmung (24) an einem mit der Schutzabdeckung (15) gemeinsam bewegbaren Gleitelement (21) und/oder an einer die Führungssäule (20) lagernden Anformung (18a) des Stützbügels (18) vorgesehen ist.

10. Spritzgießmaschine nach einem der vorhergehenden Ansprüche, **dadurch gekennzeichnet, dass** an der Schutzabdeckung (15) ein Schaltelement (25) vorgesehen ist, das mit einem am stationären Formträger (13) angeordneten Schalter (26) in Wirkverbindung steht und bei Überführung der Schutzabdekkung (15) aus Schutzposition den Betrieb der Spritzgießeinheit (S) unterbricht.

## Claims

1. Injection moulding machine for the processing of plastics materials and other plasticisable substances having
- an injection mould (10), accommodated between mould carriers (12, 13) in a mould clamping space (R),
- an injection moulding unit (S) for injecting the plasticisable substances into a central mould cavity (10a) of the injection mould (10) along an axis of injection (s-s),
- a plasticizing cylinder (16) accommodated in the injection moulding unit (S),
- an injection nozzle (14) at the end of the plasticizing cylinder (16) facing the injection mould (10), which nozzle is adjacent an injection opening (10b) of the injection mould (10) during the injection process,
- a protective cover (15) for covering the injection nozzle (14) in the protective position during the injection process, which cover can be transferred from and into the protective position guided in an axial manner substantially parallel to the axis of injection (s-s),
**characterised in that** the protective cover (15) has a lower section (15a), on which an upper section (15b) is mounted so as to be pivotable around a pivotal axis (a-a,) which is disposed substantially parallel relative to the axis of injection (s-s), and **in that** lower section (15a) and upper section (15b) can be transferred together from and into the protective position.

2. Injection moulding machine according to claim 1, **characterised in that** the injection moulding unit (S) has at least one support bracket (18), which at the same time is for guiding the protective cover.

3. Injection moulding machine according to claim 2, **characterised in that** guide columns (20) are mounted in the support bracket (18) for guiding the protective cover (15) and for displacement with the protective cover (15), wherein preferably one of the guide columns (20) simultaneously forms the pivotal axis (a-a).

4. Injection moulding machine according to one of the claims 1 - 3, **characterised in that**, for guiding the protective cover (15), guide columns (20) are provided which extend parallel to guide bars (17), via which the injection moulding unit (S) is detachably mounted on the stationary mould carrier (13), and which slide via sliding members (21) at a spacing above these guide bars (17).

5. Injection moulding machine according to claim 4, **characterised in that** the guide bars (17) pass through the circular sliding members (21) and the spacing between the circular sliding members and the guide bars (17) is such that, when the protective cover is put under load, the sliding members (21) come to abut against the guide bars (17).

6. Injection moulding machine according to claim 4 or 5, **characterised in that** the sliding members are disposed at least at the ends of the guide columns (20).

7. Injection moulding machine according to one of the preceding claims, **characterised in that** upper section (15b) and lower section (15a) are interlocked for displacement together.

8. Injection moulding machine according to one of the preceding claims, **characterised in that** the upper section (15b), or respectively the lower section (15a), has at least one locking pin (22), which extends in the direction of the axis of injection (s-s) and interacts with a recess (24) on the lower section (15a), or respectively upper section (15b), and **in that**, for unlocking purposes, the upper section, or respectively lower section, is displaceable in the direction of the axis of injection relative to the lower section, or respectively the upper section, before the upper section (15b) can be pivoted around the pivotal axis (a-a).

9. Injection moulding machine according to claim 8, **characterised in that** the recess (24) is provided on a sliding member (21), which is displaceable together with the protective cover (15), and/or on an integral profile (18a) of the support bracket (18) supporting the guide column (20).

10. Injection moulding machine according to one of the preceding claims, **characterised in that** a switching member (25) is provided on the protective cover (15), which switching member is in active communication with a switch (26) disposed on the stationary mould carrier (13) and interrupts the operation of the injection moulding unit (S) when the protective cover (15) is transferred out of the protective position.

## Revendications

1. Machine de moulage par injection pour le traitement de matières plastiques et d'autres masses plastifiables, comportant :
- un moule d'injection (10) reçu dans un espace de serrage de moule (R) entre des porte-moules (12, 13),
- une unité d'injection (S) pour injecter les masses plastifiables dans une cavité de moule (10a) du moule d'injection (10) le long d'un axe d'injection (s-s),
- un cylindre de plastification (16) reçu dans l'unité d'injection (S),
- une buse d'injection (14) à l'extrémité du cylindre de plastification (16), tournée vers le moule d'injection (10), laquelle s'applique pendant l'injection contre une ouverture d'injection (10b) du moule d'injection (10),
- un capot de protection (15) pour recouvrir la buse d'injection (14) en position de protection pendant l'injection, lequel est guidé axialement, sensiblement parallèlement à l'axe d'injection (s-s) et peut passer dans une position de protection,
**caractérisée en ce que** le capot de protection (15) comporte une partie inférieure (15a) à laquelle est fixée une partie supérieure (15b) qui peut pivoter autour d'un axe de pivotement (a-a) disposé sensiblement parallèlement à l'axe d'injection (s-s), et **en ce que** la partie inférieure (15a) et la partie supérieure (15b) peuvent passer ensemble depuis une position de protection dans une position de protection.

2. Machine de moulage par injection selon la revendication 1, **caractérisée en ce que** l'unité d'injection (S) comporte au moins un étrier de soutien (18) qui sert en même temps à guider le capot de protection (15).

3. Machine de moulage par injection selon la revendication 2, **caractérisée en ce que** dans l'étrier de soutien (18) sont montées des colonnes de guidage (20) pour guider le capot de protection (15) et pour le déplacement avec celui-ci, l'une des colonnes de guidage (20) constituant de préférence en même temps l'axe de pivotement (a-a).

4. Machine de moulage par injection selon l'une des revendications 1 à 3, **caractérisée en ce que** pour guider le capot de protection (15) sont prévues des colonnes de guidage (20) qui s'étendent parallèlement à des longerons de guidage (17) par lesquels l'unité d'injection (S) est fixée de manière séparable au porte moule (13) fixe, et qui glissent de préférence, par des éléments de glissement (21), à distance au-dessus de ces longerons de guidage (17).

5. Machine de moulage par injection selon la revendication 4, **caractérisée en ce que** les éléments de glissement (21) de forme circulaire sont traversés par les longerons de guidage (17) et maintiennent par rapport aux longerons de guidage (17) une distance si réduite que les éléments de glissement (21) viennent en contact avec les longerons de guidage (17) lorsque le capot de protection (15) est sollicité.

6. Machine de moulage par injection selon la revendication 4 ou 5, **caractérisée en ce que** les éléments de glissement (21) sont disposés au moins aux extrémités des colonnes de guidage (20).

7. Machine de moulage par injection selon l'une des revendications précédentes, **caractérisée en ce que** la partie supérieure (15b) et la partie inférieure (15a) sont verrouillées entre elles pour leur déplacement commun.

8. Machine de moulage par injection selon l'une des revendications précédentes, **caractérisée en ce que** la partie supérieure (15b) ou la partie inférieure (15a) comporte au moins un doigt de verrouillage (22), s'étendant en direction de l'axe d'injection (s-s), qui coopère avec un évidement (24) de la partie inférieure (15a) ou de la partie supérieure (15b) et **en ce que** pour le déverrouillage, la partie supérieure ou partie inférieure est déplaçable en direction de l'axe d'injection, par rapport à la partie inférieure ou partie supérieure, avant que la partie supérieure (15b) ne puisse pivoter autour de l'axe de pivotement (a-a).

9. Machine de moulage par injection selon la revendication 8, **caractérisée en ce que** l'évidement (24) est prévu sur un élément glissant (21) déplaçable avec le capot de protection (15), et/ou sur un bossage (18a), supportant la colonne de guidage (20), de l'étrier de soutien (18).

10. Machine de moulage par injection selon l'une des revendications précédentes, **caractérisée en ce que** sur le capot de protection (15) est prévu un élément de commutation (25) qui est en liaison active avec un interrupteur (26) disposé sur le porte-moule (13) fixe, et qui interrompt le fonctionnement de l'unité d'injection (S), lorsque le capot de protection (15) quitte sa position de protection.
